# EUROPEAN PATENT SPECIFICATION

(11) **EP 4 241 963 B1**
(45) Date of publication and mention of the grant of the patent: **12.02.2025**
(21) Application number: 22161665.9
(22) Date of filing: 11.03.2022
(51) Int. Cl.: B29C 53/82, B29D 99/00, B29C 70/56, B29C 70/46

(54) **MANDREL FOR PRODUCING A HOLLOW COMPOSITE COMPONENT OF A WIND TURBINE ROTOR BLADE AND METHOD USING THE MANDREL**
DORN ZUR HERSTELLUNG EINES HOHLEN VERBUNDBAUTEILS EINER WINDTURBINENROTORSCHAUFEL UND VERFAHREN UNTER VERWENDUNG DES DORNS
MANDRIN POUR LA PRODUCTION D'UN COMPOSANT COMPOSITE CREUX D'UNE PALE DE ROTOR D'ÉOLIENNE ET PROCEDE UTILISANT LE MANDRIN

(43) Date of publication of application: 13.09.2023
(73) Proprietor: LM Wind Power A/S, 6000 Kolding (DK)
(72) Inventor: Rondeau, Louis, Greenville, 29615 (US); Chen, Xu, Greenville, 29607 (US); Shillig, Scott Iverson, Greenville, 29615 (US); Collier, Andrew R, Greenville, 29615 (US)
(74) Representative: Zimmermann & Partner Patentanwälte mbB

(56) References cited:
- EP-A1- 3 894 194
- WO-A1-2005/070668

## Description

The present disclosure relates generally to a mandrel for producing a hollow composite component of a wind turbine rotor blade, a method for producing a hollow composite component of a wind turbine rotor blade using a mandrel, and a hollow composite component of a wind turbine rotor blade manufactured using a mandrel.

### BACKGROUND

Generally, a wind turbine includes a turbine that has a rotor that includes a rotatable hub assembly having multiple blades. The blades transform wind energy into a mechanical rotational torque that drives one or more generators via the rotor. The generators are sometimes, but not always, rotationally coupled to the rotor through a gearbox. The gearbox steps up the inherently low rotational speed of the rotor for the generator to efficiently convert the rotational mechanical energy to electrical energy, which is fed into a utility grid via at least one electrical connection. Gearless direct drive wind turbines also exist. The rotor, generator, gearbox and other components are typically mounted within a housing, or nacelle, that is positioned on top of a base that may be a truss or tubular tower.

In a wind turbine, rotor blades are large-scale integral hybrid structures. For a large part they are made of composites, with bolted blade-hub connections and integrated lightning protection, and including various types of composite structural materials and elements. Each rotor blade may include a number of hollow composite components, for example, a hollow spar such as a box spar or D-spar.

With conventional processes for manufacturing hollow composite structures, a mandrel is used to define the hollow space. Fiber material or sheets, such as prepreg glass fiber material, are laid up on the mandrel within a first mold part, wherein the position and shape of the fibre material on the mandrel essentially defines the composite part. A second mold part completes the mold, and the fiber material can be cured in a conventional vacuum resin curing process. This process can be used in the production of strong and light-weight composite structures of wind turbine rotor blades.

EP3894194A1 describes a method in accordance with the preamble of claim 1 for producing a hollow composite structure, such as a spar beam for use in a wind turbine blade, includes placing fiber reinforcement material around a mandrel within a mold, and curing the fiber reinforcement material. The mandrel is formed from a compressible material having a rigid neutral state with a rigidity to maintain a defined shape of the mandrel during lay up and curing of the fiber reinforcement material. Subsequent to curing, a vacuum is drawn on the mandrel to compress the compressible material so that the compressed mandrel can be drawn out through an opening in the composite structure, the opening having a size such that the mandrel could not be withdrawn through the opening in the rigid neutral state of the mandrel.

Thus, there is a need for an improved mandrel for producing a hollow composite component of a wind turbine rotor blade.

### BRIEF DESCRIPTION

The present invention is defined by the appended claims.

Aspects and advantages of the invention will be set forth in part in the following description, or may be obvious from the description, or may be learned through practice of the invention.

According to an aspect, there is provided a mandrel for producing a hollow composite component of a wind turbine rotor blade, the mandrel including a core of a first material, an outer layer of a second material arranged radially outward of the core, the second material being more compressible than the first material, and a first intensifier member for intensifying a pressure on a first inner area of a lay-up, the first intensifier member being arranged at least partially radially outward of the core, wherein a first outer surface of the first intensifier member and a second outer surface of the outer layer, together, forms a defined shape corresponding to a desired inner shape of at least a portion of the hollow composite component.

According to a further aspect, there is provided a method for producing a hollow composite component of a wind turbine rotor blade, using a mandrel as described herein, the method including placing the lay-up around the mandrel within a mould, and performing an in-mould curing process.

According to another aspect, there is provided a hollow composite component of a wind turbine rotor blade manufactured using a mandrel as described herein.

These and other aspects, embodiments, examples and advantages of the present invention will become better understood with reference to the following description and appended claims.

### BRIEF DESCRIPTION OF THE DRAWINGS

A full and enabling disclosure, including the best mode thereof, directed to the person skilled in the art, is set forth in the specification, which makes reference to the appended figures, in which:
Fig. 1 is a schematic cross-section of a mandrel according to an aspect described herein;
Fig. 2A is schematic cross-section of a first intensifier member in a non-expanded state according to embodiments described herein;
Fig. 2B is schematic cross-section of a first intensifier member in an expanded state according to embodiments described herein;
Fig. 3 is a schematic cross-section of a hollow portion according to embodiments described herein;
Fig. 4 is a schematic cross-section of a core according to embodiments described herein;
Fig. 5 is a schematic cross-section of a core and intensifier members according to embodiments described herein;
Fig. 6 is a schematic cross-section of a core, intensifier members and outer layers according to embodiments described herein;
Fig. 7 is a schematic cross-section of a mandrel according to embodiments described herein;
Fig. 8 is a diagram of a method for producing a hollow composite component according to an aspect described herein;
Fig. 9 is a diagram of a method for producing a hollow composite component according to embodiments described herein;
Fig. 10 is a schematic cross-section of a wind turbine rotor blade; and
Fig. 11 is a schematic cross-section of a hollow composite component.

### DETAILED DESCRIPTION

Reference now will be made in detail to embodiments, one or more examples of which are illustrated in the drawings. Each example is provided for explaining the present disclosure. Features illustrated or described as part of one example or embodiment can be used with another example or embodiment.

As discussed above, the present invention is directed to an improved mandrel for producing a hollow composite component of a wind turbine rotor blade, such as a spar beam.

Composite materials generally comprise a fibrous reinforcement material embedded in a matrix material, such as a polymer or ceramic material. The reinforcement material typically serves as the load-bearing constituent of the composite material, while the matrix material protects the reinforcement material, maintains the orientation of its fibers and serves to dissipate loads to the reinforcement material. Polymer matrix composite (PMC) materials are typically fabricated by impregnating a fabric with a resin, followed by curing. Prior to impregnation, the fabric may be referred to as a "dry" fabric and typically comprises a stack of two or more fiber layers (plies or sheets). Depending on the intended application and the matrix material used, the fiber layers may be formed of a variety of materials, for example, carbon (e.g., graphite), glass (e.g., fiberglass), polymer (e.g., Kevlar^{®}), and ceramic (e.g., Nextel^{®}) fibers.

In composites manufacturing, it is beneficial to produce a well-compacted laminate that has a prescribed resin-to-fiber ratio and is free of voids or flaws. Common challenges include surface porosity, voids, resin-rich areas, and bridging.

Mandrels comprising compressible material are susceptible to bridging. Bridging is when the initial, or first, fabric ply pulls away from a defined feature, e.g. a corner, and spans across, rather than remaining tightly adhered thereto. Bridging may result in resin richness, which is an undesired agglomeration of excess resin beneath the first ply of fabric that can locally weaken the laminate.

Accordingly, in a production of a hollow composite component, bridging can be an issue. The size of the radius is important, e.g. in internal corners. For example, it can be more difficult with an internal corner with a smaller radius.

The issue of bridging, such as in an inner corner, results in resin build up, and glass bridging away. This results in additional weight, as resin is heavy, and increased risk of cracking, as resin build up results in increased exothermic heat. Since wind turbine rotor blades are weight sensitive, additional weight is undesirable. Additionally, sub-standard components, e.g. due to cracked resin or sub-standard curing, are typically not repairable, and results in scrapped parts. At the least, resin build up can thermally degrade the part, and further, negatively affect safe temperature limits, e.g. ramp up, cycling.

Accordingly, it is desirable to provide a mandrel comprising compressible material, the mandrel for producing a hollow composite component of a wind turbine rotor blade, where the mandrel is improved with respect to a desired shape of the hollow composite component having a defined feature, e.g. a corner.

According to an aspect, there is provided a mandrel for producing a hollow composite component of a wind turbine rotor blade, the mandrel including a core of a first material, an outer layer of a second material arranged radially outward of the core, the second material being more compressible than the first material, and a first intensifier member for intensifying a pressure on a first inner area of a lay-up, the first intensifier member being arranged at least partially radially outward of the core, wherein a first outer surface of the first intensifier member and a second outer surface of the outer layer, together, forms a defined shape corresponding to a desired inner shape of at least a portion of the hollow composite component.

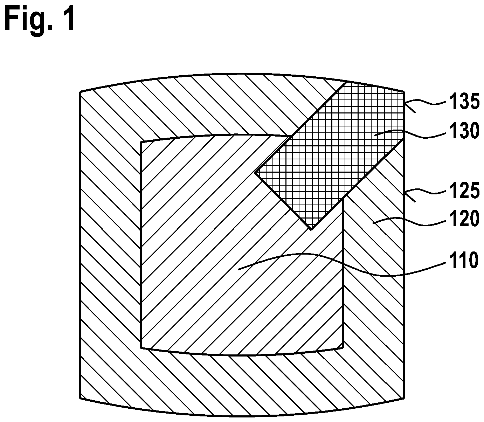

The following provides some further description, which may be understood with reference to Fig. 1.

The mandrel includes a core 110 of a first material and an outer layer 120 of a second material. The first material and the second material are compressible materials. The second material is more compressible than the first material. A compressible material may be understood as a material having a non-compressed state and a compressed state.

A compressible material may be understood as a material capable of being in a non-compressed state, in which the compressible material forms a defined shape. A compressible material may be understood as a material capable of being in a non-compressed state, in which the compressible material has sufficient rigidity to maintain a defined shape during lay up and curing of fiber reinforcement material placed around the mandrel.

A compressible material may be understood as a material capable of being transformed into a compressed state upon application of a vacuum thereto. A compressible material may be understood as a material having sufficient elasticity to return to a non-compressed state upon release of the vacuum applied thereto.

The first outer surface 135 of the first intensifier member 130 and the second outer surface 125 of the outer layer 120, together, forms a defined shape corresponding to a desired inner shape of at least a portion of the hollow composite component.

The pressure on the first inner area of the lay-up may be understood as a compressive force on the lay-up. It may be understood that a mould or a part of the mould, around the mandrel and the lay-up, in combination with a vacuum applied to the lay-up enables the pressure or compressive force to the first inner area of the lay-up. It may be understood that the depression or the opening of the core 110 acts as cylinder walls.

'Lay-up' may be understood as material(s) forming or for forming at least a portion of the hollow composite component. In particular, 'lay-up' may be understood as fiber fabric and/or composite materials. In an example, the hollow composite component is a part of a spar beam component, a spar beam component, a part of a spar beam, or a spar beam. A hollow composite component, in particular a spar beam as described herein, may be understood as being manufactured to become an inner part of a wind turbine rotor blade.

'Lay-up' may be understood to comprise or contain material in a state prior to final or complete curing, for example, comprising or containing uncured material, pre-cured material, and/or partially-cured material.

'Lay-up' may be understood as layers of material. In particular, 'lay-up' may be understood to include plies, for example, mineral plies, polymer plies, glass plies, metallic plies, carbon plies). 'Lay-up' may be understood to include fibers, for example, mineral fibers, polymer fibers, glass fibers, metallic fibers, carbon fibers.

It may be understood that polymer fiber may include aromatic polyamides, polyethylene, polyurethane and/or aramide fibers. It may be understood that the fibers may be in the form of unidirectional or multidirectional fibers, prepregs, fiber boards, or fiber mats.

In an example, 'lay-up' includes dry glass/carbon fabrics, and/or pre-preg.

In an example, 'lay-up' includes pre-fabricated material(s).

The description `a first intensifier member for intensifying a pressure' may be understood as a first intensifier member 130 for providing a higher pressure or a larger force than a pressure or a force provided if the first intensifier member is replaced by a member of the second material.

For example, in a case where the outer layer 120 is arranged also in the position in which the first intensifier member 130 is otherwise arranged, the pressure or the force provided by the extended outer layer in the position in which the first intensifier member 130 is otherwise arranged, is less than the pressure or the force provided by the first intensifier member 130 in said position.

The first outer surface 135 of the first intensifier member 130 and the second outer surface 125 of the outer layer 120, together, forms a defined shape corresponding to a desired inner shape of at least a portion of the hollow composite component.

In an example, the first outer surface 135 of the first intensifier member 130 is a surface configured to be proximate to the first inner area of the lay-up. In an example, the first outer surface 135 of the first intensifier member 130 is arranged (most) distal from the core.

In an example, the second outer surface 125 of the outer layer 120 is a surface configured to be proximate to a second inner area of the lay-up. It may be understood that the second inner area of the lay-up is proximate to the first inner area of the lay-up.

It may be understood that the first outer surface 135 of the first intensifier member 130 and the second outer surface 125 of the outer layer 120 share a common edge.

It may be understood that the first intensifier member 130 having the hollow portion 210 in an expanded state, and the outer layer 120 in a non-compressed state, together, forms the defined shape corresponding to the desired inner shape of the at least a portion of the hollow composite component.

It may be understood that the defined shape (formed by the first outer surface 135 of the first intensifier member 130 and the second outer surface 125 of the outer layer 120, together), and the desired shape (of the at least a portion of the hollow composite component) is when the lay-up is laid-up on the mandrel, in particular, during (in-mould) curing process.

In an example, the defined shape (of the mandrel) and the desired shape (of the hollow composite component) are of the mandrel and hollow composite component, respectively, during (in-mould) curing process.

It may be understood that the second inner area of the lay-up and the first inner area of the lay-up share a common edge.

It may be understood that the lay-up, laid-up on the mandrel, including the first outer surface 135 of the first intensifier member 130 and the second outer surface 125 of the outer layer 120, is cured to form at least a portion of the hollow composite component, wherein the at least a portion of the hollow composite component has the desired inner shape corresponding to the defined shape formed by the first outer surface 135 of the first intensifier member 130 and the second outer surface 125 of the outer layer 120.

Accordingly, the performance of the mandrel is improved with respect to a desired shape of the hollow composite component, having a defined feature, e.g. a corner. Accordingly, a desired shape of the hollow composite component can be better achieved. Accordingly, undesirable effects, such as bridging, may be better avoided.

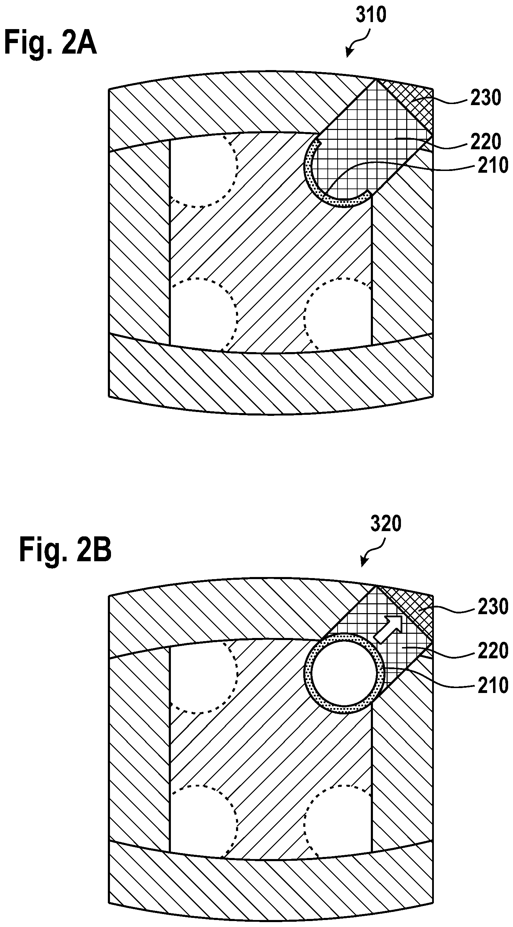

The following provides some further description, which may be understood with reference to Fig. 2A and Fig. 2B.

According to an embodiment, the first intensifier member 130 comprises a hollow portion 210 expandable by a pressurizing fluid.

In an example, the hollow portion 210 is inflatable. In an example, the hollow portion 210 may be understood as an inflatable portion. In an example, a pressurizing fluid is a gas (e.g. air, nitrogen), or a liquid (e.g. water).

According to an embodiment, the hollow portion 210 is arranged proximate to the core 110, and/or wherein the hollow portion 210 is at least partially surrounded by the core 110.

In an example, the hollow portion is arranged at a first end of the first intensifier member 130, proximate to the core 110.

In an example, the core 110 comprises a depression or an opening, e.g. a recess, a cavity, a slot, a groove or a channel.

In an example, the depression of the core 110 or the opening of the core 110 is configured for holding the first intensifier member 130.

In an example, the depression or opening of the core 110 has an inner shape complementing a shape of a portion of the first intensifier member 130.

In an example, the depression or the opening is oriented in a direction in which the intensified pressure is to be applied to the first inner area of the lay-up.

In an example, the depression or the opening is oriented in a direction of the first inner area of the lay-up.

In an example, an axis of the depression or the opening of the core 110 is oriented in a direction of the first inner area of the lay-up, the axis being in a cross-sectional plane of the core 110, the axis preferably being an axis of symmetry of the depression or the opening.

According to an embodiment, the hollow portion 210 is fluidly isolated from the core 110 and rest of the first intensifier member 130. In an example, the hollow portion 210 is fluidly isolated from the rest of the first intensifier member 130 and/or from the core 110 and/or the outer layer 120.

In an example, the hollow portion forms a fluidly sealed volume, apart from a port.

It may be understood that the port can be in an open state, e.g. to allow pressurizing fluid to pass through the port, and in a closed state, e.g. to block pressurizing fluid from passing through the port.

In an example, the first intensifier member 130 is less compressible or more rigid relative to the outer layer 120. In an example, the first intensifier member comprises a material less compressible than the second material of the outer layer 120.

Accordingly, a pressure acting on the first inner area of the lay-up proximate to the first intensifier member 130, is intensified relative to (or is larger than) a pressure acting on the second inner area of the lay-up proximate to the outer layer 120, during the curing process, e.g. curing in an autoclave.

Accordingly, the performance of the mandrel is improved with respect to a desired shape of the hollow composite component, having a defined feature, e.g. a corner. Accordingly, a desired shape of the hollow composite component can be better achieved. Accordingly, undesirable effects, such as bridging, may be better avoided.

As an illustrative example, the hollow portion 210 is a 2 inch thick discharge hose providing radial expansion of 1.25 inch.

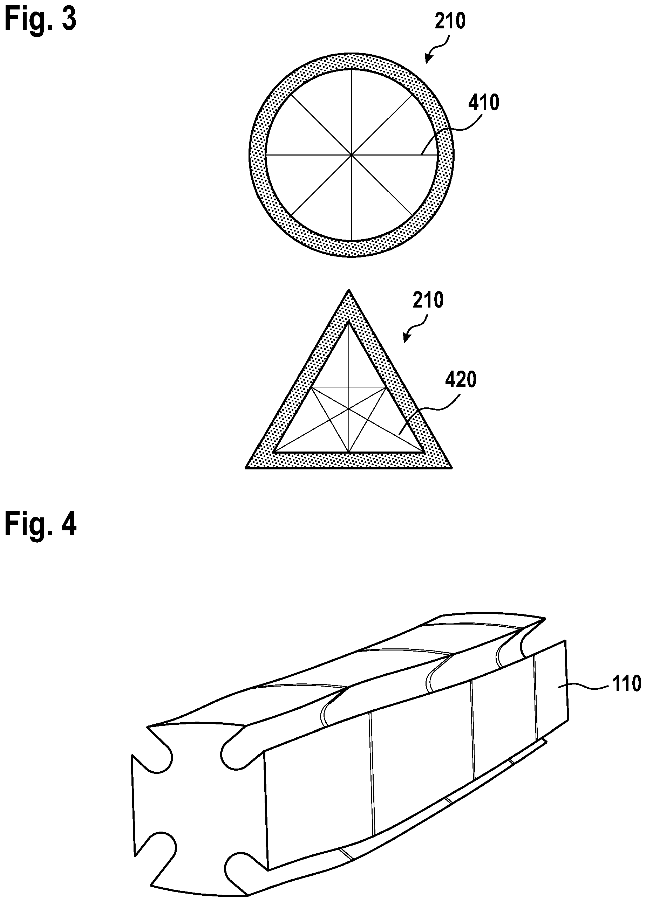

The following provides some further description, which may be understood with reference to Fig. 3.

According to an embodiment, the hollow portion 210 comprises at least one from the following group: drop stitches 410; 420, continuous fibers, and reinforcement, for defining a shape of the hollow portion 210 in an expanded state 320.

In an example, the hollow portion 210, in an expanded state 320, has a defined shape for intensifying the pressure on the first inner area of the lay-up. In an example, the first inner area of the lay-up comprises a defined feature, e.g. a corner.

In an example, the hollow portion 210 has a shape, e.g. in cross-section, circular or triangular, and/or is arranged, such that, when in an expanded state 320, intensifies the pressure on the first inner area of the lay-up, at the point of smallest radius, or along the axis of, of the defined feature, e.g. at the apex of the corner.

The following provides some further description, which may be understood with reference to Fig. 4.

The first material of the core 110 may be a foam material, for example closed-cell foam.

Generally, the first material of the core 110 may be (further comprising) a non-compressible material, such as a plastic or wood core. For example, the core 110 may be rigid. In another example, the core 110 may be hollow, e.g. having an outer (rigid) structure, with an empty inner portion, or with an inner portion that is filled with a fluid, in particular air. For example, the empty inner portion may form more than 50%, by volume, of the core 110.

The first material may be at least one of the following: polymeric, rubber, polyethylene (EPE, XLPE), EVA, polypropylene, polystyrene, Closed Cell EPDM Foam Rubber, preferably crosslinked polyethylene; density of at least 1 lb. per cubic foot, preferably at least 2 lbs. per cubic foot; density of at most 4 lbs. per cubit foot, preferably at most 3 lbs. per cubic foot; as a particular example: Minicell^{®} L200 or cross-linked polyethylene.

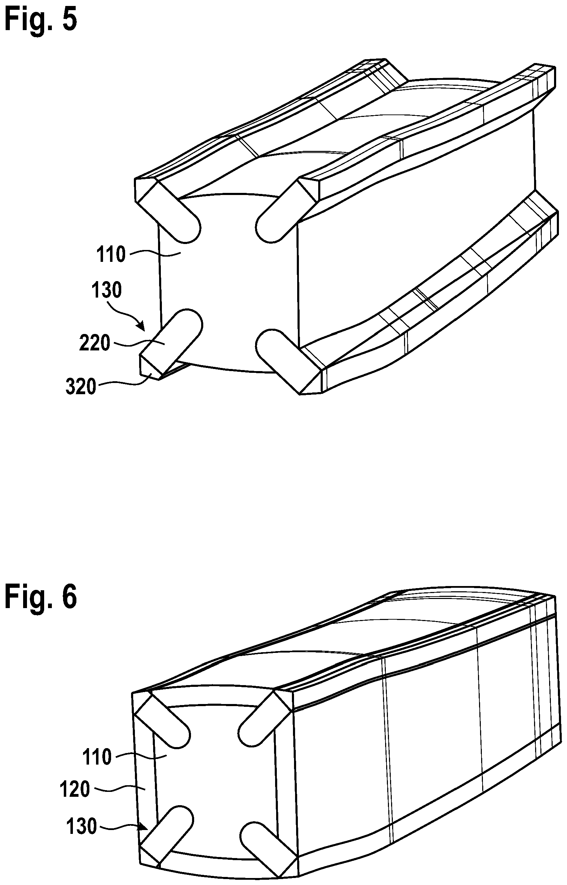

The following provides some further description, which may be understood with reference to Fig. 5.

According to an embodiment, the first intensifier member 130 comprises a first intermediate portion 220 of a third material less compressible than the second material of the outer layer 120, preferably wherein the first intermediate portion 220 comprises closed shell foam.

It may be understood that the first intermediate portion 220 is less compressible or more rigid, relative to the outer layer 120, and/or relative to the core 110.

Accordingly, the first intermediate portion 220 enables the transmission of the pressure intensification on the first inner area of the lay-up.

According to an embodiment, the first intensifier member 130 comprises a second intermediate portion 230 less compressible than the first intermediate portion 220, the second intermediate portion 230 being arranged proximate to the first outer surface 135 or having a surface forming the first outer surface 135.

In an example, the second intermediate portion 230 is incompressible or rigid. It may be understood that the second intermediate portion 230 is less compressible or more rigid, relative to the first intermediate portion, relative to the core 110, and/or relative to the outer layer 120.

In an example, the second intermediate portion 230 has an outer surface of a defined shape corresponding to the desired inner shape of at least a portion of the hollow composite component.

Accordingly, the second intermediate portion 230 enables the pressure intensification on the first inner area of the lay-up.

In an example, there may be a plurality of first intensifier members 130. In an example, a first intensifier member 130 and at least one further intensifier member, arranged in respective positions. In an example, the at least one further intensifier member may be according to embodiments and examples of the first intensifier member 130 as described herein.

The following provides some further description, which may be understood with reference to Fig. 6.

According to an embodiment, the core 110 comprises closed shell foam, and/or wherein the outer layer 120 comprises open shell foam.

The second material of the outer layer 120 may be a foam material, for example open-cell foam. The second material is more compressible than the first material.

The second material may have a lower density than the first material. The second material may be less rigid than the first material.

The second material may be at least one of the following: polymeric, rubber, polyurethane, reticulated polyurethane, PVC, nitrile, EPDM; density of at least 1 lb. per cubic foot, preferably at least 2 lbs. per cubic foot; density of at most 4 lbs. per cubit foot, preferably at most 3 lbs. per cubic foot; as a particular example: Lux-HQ^{®} or Lux^{®} foam.

In an example, there may be a plurality of outer layers 120. In an example, an outer layer 120 and at least one further outer layer, arranged in respective positions. In an example, the at least one further outer layer may be according to embodiments and examples of the outer layer 120 as described herein.

The core 110 may be understood to be a support (or a base) for the outer layer 120 and/or the first intensifier member 130. In an example, the outer layer 120 and/or the first intensifier member 130 are/is arranged radially outward of the core 110. In an example the outer layer 120 and/or the first intensifier member 130 are/is arranged on the core 110.

In an example, the outer layer 120 and/or the first intensifier member 130 are/is bonded to the core 110, e.g. using rubber glue. In an example, the outer layer 120 and the first intensifier member 130 are bonded to each other, e.g. using rubber glue.

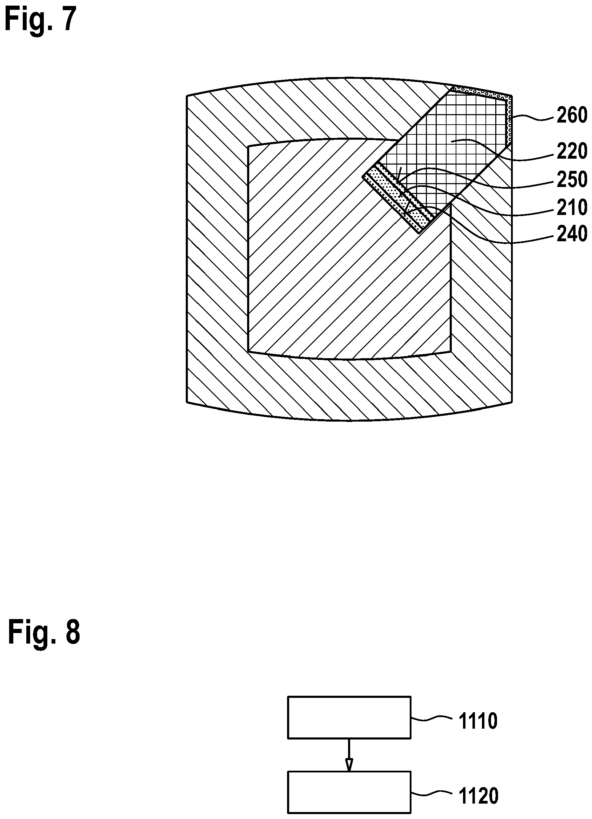

The following provides some further description, which may be understood with reference to Fig. 7.

It may be understood that the first intensifier member 130 is configured for intensifying a pressure on a first inner area of a lay-up.

For example, the first intensifier member 130 is arranged at least partially radially outward of the core. For example, the first intensifier member 130 has an inner radial position within a radial extent of the core.

In an example, the first intensifier member 130 is arranged extending from a radial position within a radial extent of the core, or from an outer surface of the core 110.

Accordingly, the core acts as a constraint to control the direction of force effected by the first intensifier member 130 on the lay up (on the first inner area of the lay-up).

According to an embodiment, an outer skin portion 260 of the first intensifier member 130 forming the first outer surface 135 is more rigid than the first intermediate portion 220 of the first intensifier member 130.

According to an embodiment, an outer skin portion 260 of the first intensifier member 130 forming the first outer surface 135 is more rigid than a portion of the outer layer 120 forming the second outer surface 125 of the outer layer 120.

In an example, the outer skin portion 260 has a rigidity module at least an order of magnitude larger than a rigidity modulus of the first intermediate portion 220, the core 110, and/or the outer layer 120.

In an example, the outer skin portion 260 is of a rigid material, e.g. fiber-reinforced plastic. In an example, the outer skin portion 260 is incompressible or rigid.

In an example, the outer skin portion 260 has an outer surface of a defined shape corresponding to the desired inner shape of at least a portion of the hollow composite component.

Accordingly, the outer skin portion 260 enables the pressure intensification on the first inner area of the lay-up.

According to an embodiment, the first outer surface 135 of the first intensifier member 130 comprises a feature with a radius smaller than a radius of any feature of the second outer surface 125 of the outer layer 120.

In an example, the first outer surface 135 of the first intensifier member 130 is a discontinuous surface or a non-flat surface.

Accordingly, the performance of the mandrel is improved with respect to a desired shape of the hollow composite component, having a defined feature, e.g. a feature with a small radius, e.g. a corner. Accordingly, a desired shape of the hollow composite component can be better achieved. Accordingly, undesirable effects, such as bridging, may be better avoided.

In an example, a first rigid surface portion 240 is arranged on a radially proximal side of the hollow portion 210. In an example, a second rigid surface portion 250 is arranged on a radially distal side of the hollow portion 210.

Accordingly, the first rigid surface portion 240 and the second rigid surface portion 250 enables the directed transmission of the pressure intensification on the first inner area of the lay-up.

The term 'radially proximal' may be understood as proximate to the center (of the core 110), in a radial direction, or proximate to the core 110, in a radial direction. The term `radially distal' may be understood distant from the center (of the core 110), in a radial direction, or distant from the core 110, in a radial direction.

The term `radial direction' may be understood as a direction extending outward from a center of the core 110 or from a center of the mandrel, in a cross-sectional plane of the core 110 or in a cross-sectional plane of the mandrel.

The term 'radial' may be understood to be along a direction extending outward from a center of the core 110 or from a center of the mandrel, in a cross-sectional plane of the core 110 or in a cross-sectional plane of the mandrel.

According to an embodiment, a thickness dimension of the outer layer 120 is configured to enable extraction of the mandrel from the hollow composite component, and/or wherein a thickness dimension of the outer layer 120 is configured based on a compressibility of the second material of the outer layer 120 and a geometry of the hollow composite component.

Accordingly, the compressed mandrel, having a reduced cross-sectional size, particularly due to the compression of the outer layer 120, can be withdrawn from the hollow composite structure, post-curing. It may be understood that the mandrel could not be withdrawn from the hollow composite structure, post-curing, when the mandrel is not compressed, i.e. when the mandrel is in a non-compressed state.

Accordingly, a compressible mandrel, as described herein, may be understood to enable extraction of the mandrel from the hollow composite component, post-curing. Since a compressible mandrel is at particular risk of undesirable effects, such as bridging, due to its compressibility, a compressible mandrel, provided with a pressure intensifier member, as described herein, enables a compressible mandrel to achieve a shape definition similar to a rigid mandrel, yet still having the benefits of a compressible mandrel.

According to an aspect, there is provided a method for producing a hollow composite component of a wind turbine rotor blade, using a mandrel as described herein, the method including placing the lay-up around the mandrel within a mould, and performing an in-mould curing process.

The following provides some further description, which may be understood with reference to Fig. 8.

Placing the lay-up around the mandrel within a mould 1110 may be understood as a fiber material lay up process. In an example, the lay-up is laid-up in a mould or in a part of a mould. In an example, a mandrel is arranged on the laid-up lay-up. In an example, the laid-up lay-up with the mandrel arranged atop is arranged around the mandrel.

Performing an in-mould curing process 1120 may be understood as following a resin infusion process. It may be understood that a resin infusion process is performed after drawing, in the mould, a vacuum.

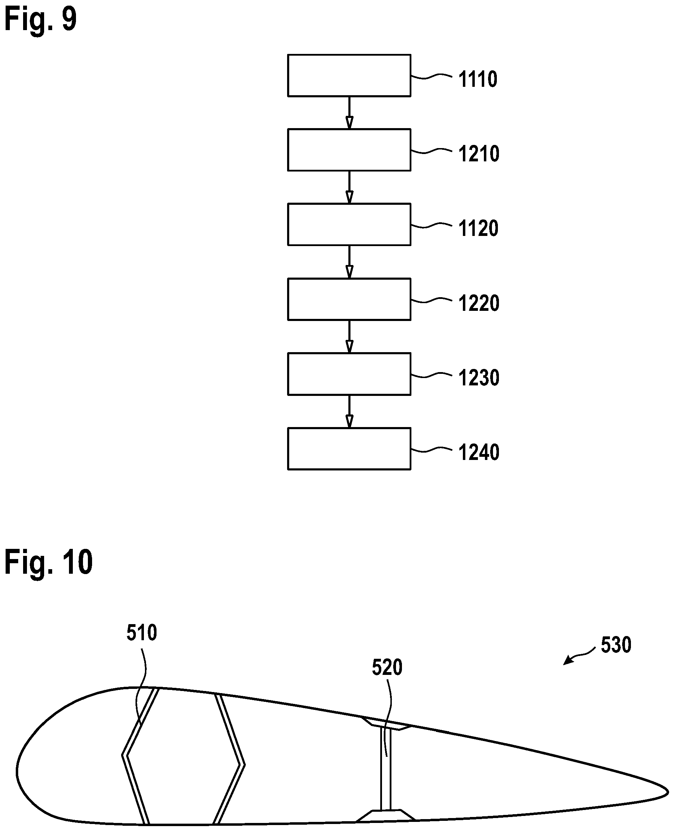

The following provides some further description, which may be understood with reference to Fig. 9.

According to an embodiment, the method for producing a hollow composite component of a wind turbine rotor blade comprises activating the first intensifier member 1210, at least during the in-mould curing process, preferably before the in-mould curing process.

According to an embodiment, activating the first intensifier member 1210 comprises fluidly pressurizing a hollow portion of the first intensifier member.

In an example, a gas or liquid pump may be fluidly connected to the hollow portion 210. In an example, the hollow portion may be pressurized using the gas or liquid pump.

In an example, fluidly pressurizing a hollow portion of the first intensifier member comprises pumping a gas or liquid into the hollow portion of the first intensifier member. In an example, the hollow portion is in a fluidly pressurized state or expanded state when a pressure of the fluid in the hollow portion reaches an upper pressure limit of the hollow portion.

According to an embodiment, the method for producing a hollow composite component of a wind turbine rotor blade comprises extracting the mandrel 1240 from the composite component.

According to an embodiment, extracting the mandrel 1240 comprises deactivating the first intensifier member 1220 and drawing a vacuum on the mandrel 1230.

According to an embodiment, deactivating the first intensifier member 1220 comprises releasing fluid pressure to the first intensifier member, after the in-mould curing process.

According to an embodiment, activating the first intensifier member 1210 comprises effecting a first pressure, by the first intensifier member, on the first inner area of the lay-up, that is higher than a second pressure, by the outer layer, on a second inner area of the lay-up that is proximate to the first inner area.

Accordingly, the pressure is intensified at least during curing of the lay-up. Accordingly, a desired shape of the hollow composite component can be better achieved.

According to an aspect, there is provided a hollow composite component of a wind turbine rotor blade manufactured using a mandrel as described herein.

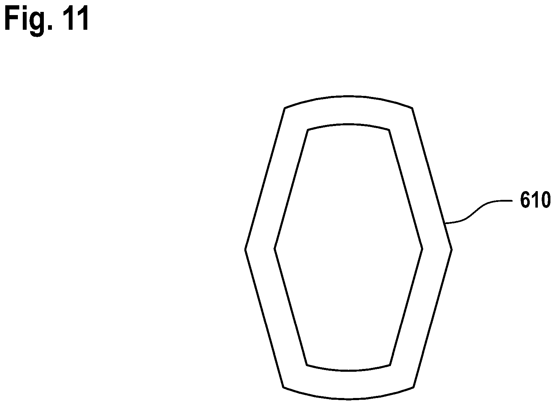

The following provides some further description, which may be understood with reference to Fig. 10 and Fig. 11.

In an example, a hollow composite component of a wind turbine rotor blade as described herein, is (e.g., a part of) a spar beam component, e.g. first spar member 510 or third spar member 610.

In an example, the first spar member 510 is a hollow spar member, integrated into the structure of the wind turbine rotor blade 530. In another example, the first spar member 510 is composed of a plurality of components, including at least one hollow composite component.

In an example, the third spar member 610 is a hollow spar member arranged within a receiving section, e.g. first spar member 510, of a wind turbine rotor blade 530.

In an example, the second spar member 520 may include a hollow composite component, for example a hollow spar web which may be arranged between spar caps.

In an example, a wind turbine rotor blade 530 may be as depicted in Fig. 10.

As an illustrative example, a core is formed of a harder, less compressible foam. As an illustrative example, the mandrel is cut to the profile of the inner mould line of the hollow composite component, minus the offset for the bulked lay-up. As an illustrative example, the mandrel is also offset to allow a layer of more compressible open cell forming the outer layer.

As an illustrative example, this outer layer thickness is defined by the amount of compression needed to extract the mandrel from the hollow composite component. As an illustrative example, the thickness of this outer layer is in accordance or based on the geometry of the hollow composite component.

As an illustrative example, in the areas of the lay-up that need higher compression, a pressurizable member is provided. As an illustrative example, this pressurizable member may have a constrained shape when pressured or the movement of which may be constrained to a specific direction, i.e. a vector of force is provided.

As an illustrative example, the core is used to control the vector of force and orient the vector of force at the desired location of the lay-up.

As an illustrative example, the outer layer is compressible. As an illustrative example, by vacuuming down the air inside the mandrel, the foam is compressed, and the mandrel size is reduced, allowing the mandrel to be extracted from the hollow composite component in which the mandrel would otherwise be die locked.

As an illustrative example, a less compressive component makes the core of the mandrel. As an illustrative example, the core acts as a support for the compressible layers as well as a constraint that control the direction in which the compressive force is applied to the lay up.

As an illustrative example, the slot in the core is oriented in the direction in which the pressure is applied to the laminate. As an illustrative example, the slot in the core acts as cylinder walls.

As an illustrative example, the slot in the core is filled with an expandable element that provides directional movement and/or pressure. As an illustrative example, the expandable element is covered by harder and/or less compressible foam, or even solid rigid components if needed, to pinpoint the area that needs to be compressed.

As an illustrative example, an outside layer is made of compressible open cell material that can be considerable reduced in size under compression or vacuum allowing the extraction of the mandrel out of an otherwise die locked shape.

As an illustrative example, the mandrel includes foams of different firmness. As an illustrative example, a first foam is provided for the all-around cover and a second foam firmer than the first foam is provided for the corners.

As an illustrative example, a combination of open-cell foam and closed-cell foam is provided for the corners.

It is beneficial to provide a mandrel design allowing the manufacturing of a hollow die lock composite part. A collapsible mandrel beneficially facilitates extraction. A mandrel incorporating intensifiers which may be pneumatically activated and which can provide controlled linear movement to intensify pressure in specific areas such as corners or other geometry that necessitate very good definition is beneficial.

The use of various density and compressibility closed cell foam, various density and compressibility open cell foam, composite rigid components, as well as inflatable/expandable components constrained in a way to control the direction of the movement providing the pressure is beneficial.

It is beneficial to provide a pressurized mandrel shape constrained and controlled in a way that defines the final shape thereof. Internal and external reinforcement, such as drop stitches, continuous fibers and fabrics, may be used to achieve such a final shape.

A highly directional movement ensuring the critical area of the part is well defined while still allowing enough collapsibility or compression to allow extraction of a die lock part is beneficial.

It is thus beneficial to combine the ability to apply pressure in a specific area of a part while still being compressible enough to allow extraction out of a hollow die lock composite structure. In general, in compressible mandrels, expansion is uniform.

It is beneficial to control where the pressure is applied to avoid bridging of glass fabric. In general, inflatables do not constrain expansion. It is thus provided a mandrel with precise control where pressure is applied while still being able to be collapsed sufficiently to offset the die lock and allow for extraction.

It is thus described a mandrel which allows precise control of the axis of the force applied, by constraining the expansion in a specific direction, through the use of different compressibility components or internal constraints to the expanding structure, such as drop stitches or other reinforcements.

It has been discovered, that in a spar beam moulded for a pin joint for a wind turbine, inside radii is critical for reducing fatigue resistance of the part. It has been discovered that these radii are critically controlled by the way the glass is laid up. It has been discovered that this is extremely operator dependent.

It has been discovered that it is one of the most important cause of scrap part, and that it is actually generally impossible to repair the inside of such a hollow part.

Accordingly, it is described a mandrel which controls the direction of force by intensifiers. It is beneficial to use hollow shapes that can be pressurized with a gas or liquid but which is constrained to a final shape when pressurized. This can beneficially be achieved by internal reinforcement, fabric, or drop stitches that define the final pressurized shape and prevent expansion in directions where no compression is wanted or needed.

It has been discovered that such a mandrel is much more resource efficient than a mechanical apparatus. It has been discovered that such a mandrel is much more flexible as there are very few solid/rigid components. It has been discovered that such a mandrel requires a lot less precision, being much more permissive in not constraining axes.

A solid mandrel having (mechanical) activators to apply pressure in specific areas are generally very complex, less flexible and much less resource efficient.

The present written description uses embodiments and examples to provide enabling disclosure. The scope of the present invention is defined by the appended claims.

## Claims

1. A mandrel for producing a hollow composite component of a wind turbine rotor blade, the mandrel comprising:
a core (110) of a first material;
an outer layer (120) of a second material arranged radially outward of the core (110), the second material being more compressible than the first material; and **characterized by**
a first intensifier member (130) for intensifying a pressure on a first inner area of a lay-up, the first intensifier member (130) being arranged at least partially radially outward of the core (110),
wherein a first outer surface (135) of the first intensifier member (130) and a second outer surface (125) of the outer layer (120), together, forms a defined shape corresponding to a desired inner shape of at least a portion of the hollow composite component.

2. The mandrel according to claim 1, wherein the first intensifier member (130) comprises a hollow portion (210) expandable by a pressurizing fluid.

3. The mandrel according to claim 2, wherein the hollow portion (210) is arranged proximate to the core (110), and/or wherein the hollow portion (210) is at least partially surrounded by the core (110).

4. The mandrel according to any of claims 2 to 3, wherein the hollow portion (210) is fluidly isolated from the core (110) and rest of the first intensifier member (130).

5. The mandrel according to any of claims 2 to 4, wherein the hollow portion (210) comprises at least one from the following group: drop stitches (410; 420), continuous fibres, and reinforcement, for defining a shape of the hollow portion (210) in an expanded state (320).

6. The mandrel according to any of claims 1 to 5, wherein the first intensifier member (130) comprises a first intermediate portion (220) of a third material less compressible than the second material of the outer layer (120), preferably wherein the first intermediate portion (220) comprises closed cell foam.

7. The mandrel according to claim 6, wherein an outer skin portion (260) of the first intensifier member (130) forming the first outer surface (135) is more rigid than the intermediate portion (220) of the first intensifier member (130); and/or
the mandrel according to any of claims 1 to 6, wherein an outer skin portion (260) of the first intensifier member (130) forming the first outer surface (135) is more rigid than a portion of the outer layer (120) forming the second outer surface (125) of the outer layer (120); and/or
the mandrel according to claim 6, wherein the first intensifier member (130) comprises a second intermediate portion (230) less compressible than the first intermediate portion (220), the second intermediate portion (230) being arranged proximate to the first outer surface (135) or having a surface forming the first outer surface (135).

8. The mandrel according to any of claims 1 to 7, wherein the first outer surface (135) of the first intensifier member (130) comprises a feature with a radius smaller than a radius of any feature of the second outer surface (125) of the outer layer (120)..

9. The mandrel according to any of claims 1 to 8, wherein the core (110) comprises closed cell foam, and/or wherein the outer layer (120) comprises open cell foam.

10. The mandrel according to any of claims 1 to 9, wherein a thickness dimension of the outer layer (120) is configured to enable extraction of the mandrel from the hollow composite component, and/or wherein a thickness dimension of the outer layer (120) is configured based on a compressibility of the second material of the outer layer (120) and a geometry of the hollow composite component.

11. A method for producing a hollow composite component of a wind turbine rotor blade, using a mandrel according to any of claims 1 to 9, the method comprising:
placing the lay-up around the mandrel within a mould (1110); and
performing an in-mould curing process (1120).

12. The method according to claim 11, further comprising:
activating the first intensifier member (1210), at least during the in-mould curing process, preferably before the in-mould curing process,
wherein activating the first intensifier member (1210) preferably comprises fluidly pressurizing a hollow portion of the first intensifier member.

13. The method according to any of claims 11 to 12, further comprising:
extracting the mandrel (1240) from the composite component,
wherein extracting the mandrel (1240) comprises deactivating the first intensifier member (1220) and drawing a vacuum on the mandrel (1230),
wherein deactivating the first intensifier member (1220) preferably comprises releasing fluid pressure to the first intensifier member, after the in-mould curing process.

14. The method according to any of claims 11 to 13, wherein activating the first intensifier member (1210) comprises effecting a first pressure, by the first intensifier member, on the first inner area of the lay-up, that is higher than a second pressure, by the outer layer, on a second inner area of the lay-up that is proximate to the first inner area.

15. A hollow composite component of a wind turbine rotor blade manufactured using a mandrel according any of claims 1 to 9.

## Patentansprüche

1. Dorn zum Herstellen eines hohlen Verbundbauteils eines Rotorblatts einer Windturbine, wobei der Dorn umfasst:
einen Kern (110) aus einem ersten Material;
eine äußere Schicht (120) aus einem zweiten Material, die radial außerhalb des Kerns (110) angeordnet ist, wobei das zweite Material stärker komprimierbar ist als das erste Material; und **gekennzeichnet durch**
ein erstes Verstärkungselement (130) zum Verstärken eines Drucks auf einen ersten inneren Bereich eines Schichtaufbaus, wobei das erste Verstärkungselement (130) zumindest teilweise radial außerhalb des Kerns (110) angeordnet ist,
wobei eine erste Außenfläche (135) des ersten Verstärkungselements (130) und eine zweite Außenfläche (125) der äußeren Schicht (120) zusammen eine definierte Form bilden, die mit einer gewünschten inneren Form mindestens eines Abschnitts des hohlen Verbundbauteils korrespondiert.

2. Dorn nach Anspruch 1, wobei das erste Verstärkungselement (130) einen hohlen Abschnitt (210) umfasst, der durch ein Druckfluid ausdehnbar ist.

3. Dorn nach Anspruch 2, wobei der hohle Abschnitt (210) in der Nähe des Kerns (110) angeordnet ist und/oder wobei der hohle Abschnitt (210) zumindest teilweise von dem Kern (110) umgeben ist.

4. Dorn nach einem der Ansprüche 2 bis 3, wobei der hohle Abschnitt (210) von dem Kern (110) und dem Rest des ersten Verstärkungselements (130) fluidisch isoliert ist.

5. Dorn nach einem der Ansprüche 2 bis 4, wobei der hohle Abschnitt (210) mindestens eines aus der folgenden Gruppe umfasst: Fallmaschen (410; 420), Endlosfasern und Verstärkung, um eine Form des hohlen Abschnitts (210) in einem expandierten Zustand (320) zu definieren.

6. Dorn nach einem der Ansprüche 1 bis 5, wobei das erste Verstärkungselement (130) einen ersten Zwischenabschnitt (220) aus einem dritten Material umfasst, das weniger kompressibel ist als das zweite Material der äußeren Schicht (120), wobei der erste Zwischenabschnitt (220) vorzugsweise einen geschlossenen Zellschaum umfasst.

7. Dorn nach Anspruch 6, wobei ein Außenhautabschnitt (260) des ersten Verstärkungselements (130), der die erste Außenfläche (135) bildet, steifer ist als der Zwischenabschnitt (220) des ersten Verstärkungselements (130); und/oder
der Dorn gemäß einem der Ansprüche 1 bis 6, wobei ein Außenhautabschnitt (260) des ersten Verstärkungselements (130), der die erste Außenfläche (135) bildet, steifer ist als ein Abschnitt der äußeren Schicht (120), der die zweite Außenfläche (125) der äußeren Schicht (120) bildet; und/oder
der Dorn nach Anspruch 6, wobei das erste Verstärkungselement (130) einen zweiten Zwischenabschnitt (230) umfasst, der weniger kompressibel ist als der erste Zwischenabschnitt (220), wobei der zweite Zwischenabschnitt (230) in der Nähe der ersten Außenfläche (135) angeordnet ist oder eine Fläche aufweist, die die erste Außenfläche (135) bildet.

8. Dorn nach einem der Ansprüche 1 bis 7, wobei die erste Außenfläche (135) des ersten Verstärkungselements (130) ein Merkmal mit einem Radius umfasst, der kleiner ist als ein Radius eines beliebigen Merkmals der zweiten Außenfläche (125) der äußeren Schicht (120).

9. Dorn nach einem der Ansprüche 1 bis 8, wobei der Kern (110) geschlossenen Zellschaum umfasst und/oder wobei die äußere Schicht (120) einen offenen Zellschaum umfasst.

10. Dorn nach einem der Ansprüche 1 bis 9, wobei eine Dickenabmessung der äußeren Schicht (120) so konfiguriert ist, dass sie das Herausziehen des Dorns aus dem hohlen Verbundbauteil ermöglicht, und/oder wobei eine Dickenabmessung der äußeren Schicht (120) auf der Grundlage einer Kompressibilität des zweiten Materials der äußeren Schicht (120) und einer Geometrie des hohlen Verbundbauteils konfiguriert ist.

11. Verfahren zur Herstellung eines hohlen Verbundbauteils eines Rotorblatts einer Windturbine unter Verwendung eines Dorns gemäß einem der Ansprüche 1 bis 9, wobei das Verfahren umfasst:
Anordnen des Schichtaufbaus um den Dorn herum in einer Form (1110); und
Durchführen eines In-Mould-Härtungsprozesses (1120).

12. Verfahren gemäß Anspruch 11, ferner umfassend:
Aktivieren des ersten Verstärkungselements (1210), zumindest während des In-Mould-Härtungsprozesses, vorzugsweise vor dem In-Mould-Härtungsprozess,
wobei das Aktivieren des ersten Verstärkungselements (1210) vorzugsweise die fluidische Druckbeaufschlagung eines hohlen Abschnitts des ersten Verstärkungselements umfasst.

13. Verfahren gemäß einem der Ansprüche 11 bis 12, ferner umfassend:
Entfernen des Dorns (1240) aus dem Verbundbauteil,
wobei das Entfernen des Dorns (1240) das Deaktivieren des ersten Verstärkungselements (1220) und das Ansaugen eines Vakuums an den Dorn (1230) umfasst,
wobei das Deaktivieren des ersten Verstärkungselements (1220) vorzugsweise das Ablassen des Fluiddrucks zum ersten Verstärkungselement nach dem In-Mould-Aushärtungsprozess umfasst.

14. Verfahren nach einem der Ansprüche 11 bis 13, wobei das Aktivieren des ersten Verstärkungselements (1210) das Ausüben eines ersten Drucks durch das erste Verstärkungselement auf den ersten inneren Bereich des Schichtaufbaus umfasst, der höher ist als ein zweiter Druck durch die äußere Schicht auf einen zweiten inneren Bereich des Schichtaufbaus, der sich in der Nähe des ersten inneren Bereichs befindet.

15. Hohles Verbundbauteil eines Rotorblatts einer Windturbine, das unter Verwendung eines Dorns gemäß einem der Ansprüche 1 bis 9 hergestellt wird.

## Revendications

1. Mandrin pour la production d'un composant composite creux d'une pale de rotor d'éolienne, le mandrin comprenant :
une âme (110) d'un premier matériau ;
une couche externe (120) d'un deuxième matériau agencée radialement à l'extérieur de l'âme (110), le deuxième matériau étant plus compressible que le premier matériau ; et **caractérisé par**
un premier élément intensificateur (130) pour l'intensification d'une pression sur une première zone interne d'une stratification, le premier élément intensificateur (130) étant agencé au moins partiellement radialement à l'extérieur de l'âme (110),
dans lequel une première surface externe (135) du premier élément intensificateur (130) et une seconde surface externe (125) de la couche externe (120) forment, ensemble, un profil défini correspondant à un profil interne souhaité d'au moins une portion du composant composite creux.

2. Mandrin selon la revendication 1, dans lequel le premier élément intensificateur (130) comprend une portion creuse (210) expansible par un fluide de pressurisation.

3. Mandrin selon la revendication 2, dans lequel la portion creuse (210) est agencée à proximité de l'âme (110), et/ou dans lequel la portion creuse (210) est au moins partiellement entourée par l'âme (110).

4. Mandrin selon l'une quelconque des revendications 2 à 3, dans lequel la portion creuse (210) est isolée de manière fluidique de l'âme (110) et du reste du premier élément intensificateur (130).

5. Mandrin selon l'une quelconque des revendications 2 à 4, dans lequel la portion creuse (210) comprend au moins l'un du groupe suivant : mailles coulées (410 ; 420), fibres continues, et renfort, pour la définition d'un profil de la portion creuse (210) dans un état expansé (320).

6. Mandrin selon l'une quelconque des revendications 1 à 5, dans lequel le premier élément intensificateur (130) comprend une première portion intermédiaire (220) d'un troisième matériau moins compressible que le deuxième matériau de la couche externe (120), de préférence dans lequel la première portion intermédiaire (220) comprend une mousse à cellules fermées.

7. Mandrin selon la revendication 6, dans lequel une portion de peau externe (260) du premier élément intensificateur (130) formant la première surface externe (135) est plus rigide que la portion intermédiaire (220) du premier élément intensificateur (130) ; et/ou
mandrin selon l'une quelconque des revendications 1 à 6, dans lequel une portion de peau externe (260) du premier élément intensificateur (130) formant la première surface externe (135) est plus rigide qu'une portion de la couche externe (120) formant la seconde surface externe (125) de la couche externe (120) ; et/ou
mandrin selon la revendication 6, dans lequel le premier élément intensificateur (130) comprend une seconde portion intermédiaire (230) moins compressible que la première portion intermédiaire (220), la seconde portion intermédiaire (230) étant agencée à proximité de la première surface externe (135) ou ayant une surface formant la première surface externe (135).

8. Mandrin selon l'une quelconque des revendications 1 à 7, dans lequel la première surface externe (135) du premier élément intensificateur (130) comprend une caractéristique avec un rayon plus petit qu'un rayon d'une quelconque caractéristique de la seconde surface externe (125) de la couche externe (120).

9. Mandrin selon l'une quelconque des revendications 1 à 8, dans lequel l'âme (110) comprend une mousse à cellules fermées, et/ou dans lequel la couche externe (120) comprend une mousse à cellules ouvertes.

10. Mandrin selon l'une quelconque des revendications 1 à 9, dans lequel une dimension d'épaisseur de la couche externe (120) est conçue pour permettre une extraction du mandrin du composant composite creux, et/ou dans lequel une dimension d'épaisseur de la couche externe (120) est conçue en fonction de la compressibilité du deuxième matériau de la couche externe (120) et d'une géométrie du composant composite creux.

11. Procédé pour la production d'un composant composite creux d'une pale de rotor d'éolienne, à l'aide d'un mandrin selon l'une quelconque des revendications 1 à 9, le procédé comprenant :
la mise en place de la stratification autour du mandrin au sein d'un moule (1110) ; et
la mise en oeuvre d'un processus de durcissement dans le moule (1120).

12. Procédé selon la revendication 11, comprenant en outre :
l'activation du premier élément intensificateur (1210), au moins pendant le processus de durcissement dans le moule, de préférence avant le processus de durcissement dans le moule,
dans lequel l'activation du premier élément intensificateur (1210) comprend de préférence la pressurisation de manière fluidique d'une portion creuse du premier élément intensificateur.

13. Procédé selon l'une quelconque des revendications 11 à 12, comprenant en outre :
l'extraction du mandrin (1240) du composant composite,
dans lequel l'extraction du mandrin (1240) comprend la désactivation du premier élément intensificateur (1220) et l'aspiration d'un vide sur le mandrin (1230),
dans lequel la désactivation du premier élément intensificateur (1220) comprend de préférence la libération d'une pression de fluide sur le premier élément intensificateur, après le processus de durcissement dans le moule.

14. Procédé selon l'une quelconque des revendications 11 à 13, dans lequel l'activation du premier élément intensificateur (1210) comprend l'exercice d'une première pression, par le premier élément intensificateur, sur la première zone interne de la stratification, qui est plus grande qu'une seconde pression, par la couche externe, sur une seconde zone interne de la stratification qui est à proximité de la première zone interne.

15. Composant composite creux d'une pale de rotor d'éolienne fabriqué à l'aide d'un mandrin selon l'une quelconque des revendications 1 à 9.
